# EUROPEAN PATENT SPECIFICATION

(11) **EP 4 057 669 B1**
(45) Date of publication and mention of the grant of the patent: **22.01.2025**
(21) Application number: 21161917.6
(22) Date of filing: 11.03.2021
(51) Int. Cl.: H04W 24/02, H04W 88/16

(54) **METHOD FOR OPERATING A BROADBAND ACCESS NETWORK OF A TELECOMMUNICATIONS NETWORK FOR PROVIDING FIXED MOBILE CONVERGENCE, FMC, AND/OR FIXED MOBILE INTERWORKING, FMI, ACCESS AND FUNCTIONALITY TO A PLURALITY OF RESIDENTIAL GATEWAYS CONNECTED TO THE TELECOMMUNICATIONS NETWORK, TELECOMMUNICATIONS NETWORK, SYSTEM, AND FMC ACCESS GATEWAY FUNCTION NODE OR INSTANCE, PROGRAM AND COMPUTER PROGRAM PRODUCT**
VERFAHREN ZUM BETRIEB EINES BREITBANDZUGANGSNETZES EINES TELEKOMMUNIKATIONSNETZES ZUR BEREITSTELLUNG VON FEST- UND MOBILFUNKKONVERGENZ (FMC) UND/ODER FEST- UND MOBILFUNKVERKNÜPFUNG (FMI), ZUGANG UND FUNKTIONALITÄT FÜR EINE VIELZAHL VON MIT DEM TELEKOMMUNIKATIONSNETZ VERBUNDENEN KABELMODEMS, TELEKOMMUNIKATIONSNETZ, SYSTEM UND FMC-ZUGANGSGATEWAY-FUNKTIONSKNOTEN ODER -INSTANZ, PROGRAMM UND COMPUTERPROGRAMMPRODUKT
PROCÉDÉ D'EXPLOITATION D'UN RÉSEAU D'ACCÈS À LARGE BANDE D'UN RÉSEAU DE TÉLÉCOMMUNICATIONS POUR FOURNIR UN ACCÈS ET UNE FONCTIONNALITÉ DE CONVERGENCE FIXE-MOBILE, FMC, ET/OU D'INTERFONCTIONNEMENT FIXE-MOBILE, FMI, À UNE PLURALITÉ DE PASSERELLES RÉSIDENTIELLES CONNECTÉES AU RÉSEAU DE TÉLÉCOMMUNICATIONS, RÉSEAU DE TÉLÉCOMMUNICATIONS, SYSTÈME, ET NOEUD OU INSTANCE DE FONCTION DE PASSERELLE D'ACCÈS FMC, PROGRAMME ET PRODUIT PROGRAMME INFORMATIQUE

(43) Date of publication of application: 14.09.2022
(73) Proprietor: Deutsche Telekom AG, 53113 Bonn (DE)
(72) Inventor: RÖMER, Stefanus, 55773 Hennef (DE); HAAG, Thomas, 63110 Rodgau (DE)
(74) Representative: Schwöbel, Thilo K.

(56) References cited:
- WO-A1-2018/166709
- "WT-456 AGF Functional Requirements", 12 February 2020 (2020-02-12), XP051853869, Retrieved from the Internet <URL:https://ftp.3gpp.org/tsg_ran/WG3_Iu/TSGR3_107_e/Docs/R3-200300.zip WT-456_AGF_Functional_Requirements_Straw_Ballot_Issue-01.doc> [retrieved on 20200212]
- BROADBAND FORUM: "REVISION 3 contrib-20838 SD-420 R3 5G Fixed Mobile Convergence Study", 18 January 2019 (2019-01-18), XP051611311, Retrieved from the Internet <URL:http://www.3gpp.org/ftp/tsg%5Fsa/WG3%5FSecurity/TSGS3%5F94%5FKochi/Docs/S3%2D190029%2Ezip> [retrieved on 20190118]
- "WT-470 5G FMC Architecture", 12 February 2020 (2020-02-12), XP051853870, Retrieved from the Internet <URL:https://ftp.3gpp.org/tsg_ran/WG3_Iu/TSGR3_107_e/Docs/R3-200300.zip WT-470_5G_FMC_Architecture_Straw_Ballot_Issue_01.doc> [retrieved on 20200212]

## Description

### BACKGROUND

The present invention relates a method for operating a broadband access network of a telecommunications network for providing fixed mobile convergence, FMC, and/or fixed mobile interworking, FMI, access and functionality to a plurality of residential gateways connected to the telecommunications network, the residential gateways being connected to the broadband access network via a plurality of line termination nodes, wherein the broadband access network comprises an FMC access gateway function node or instance, especially a 5G access gateway function node or instance.

Furthermore, the present invention relates to a telecommunications network for operating a broadband access network of the telecommunications network for providing fixed mobile convergence, FMC, and/or fixed mobile interworking, FMI, access and functionality to a plurality of residential gateways connected to the telecommunications network, the residential gateways being connected to the broadband access network via a plurality of line termination nodes, wherein the broadband access network comprises an FMC access gateway function node or instance, especially a 5G access gateway function node or instance.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

The present invention generally relates to the area of aggregation networks linking remote or central access nodes to a backbone network or core network of the telecommunications network, e.g. broadband access network platforms such as 5G or CORD (Central Office Re-architected as a Data Center).

Different technical worlds have to be combined for the realization of convergent service production based on access networks from fixed network production and mobile communications (Fixed Mobile Convergence, FMC, and/or fixed mobile interworking, FMI), especially in case that a mobile core network (such as a 5G core network) controls the usage of fixed access lines (such as DSL lines or optical fiber lines) in such a way that user authentication, session management and the user data transfer is done by the mobile core network, especially according to 3GPP standards. In the general context of 5G Fixed Mobile Convergence, Broadband Forum Working Text WT-456 ("AGF Functional Requirements", January 2020) describes the use of a 5G Access Gateway Function (AGF) as an adaption function for 5G convergence. Broadband Forum Study Document SD-420 ("5G Fixed Mobile Convergence Study", Revision 3, November 2018) proposes the introduction of a new Subscription Permanent Identifier (SUPI) derived from the line ID for registering a Fixed Network-Residential Gateway (FN-RG). Broadband Forum Working Text WT-470 ("5G FMC Architecture", January 2020) provides additional technical background for the corresponding network architecture.

### SUMMARY

An object of the present invention is to provide a technically simple, effective and cost effective solution for operating a broadband access network of a telecommunications network for providing fixed mobile convergence, FMC, and/or fixed mobile interworking, FMI, access and functionality to a plurality of residential gateways connected to the telecommunications network, especially via the central office point of delivery. A further object of the present invention is to provide a corresponding telecommunications network, a corresponding system, a corresponding FMC access gateway function node or instance, and a corresponding program and computer-readable medium.

The object of the present invention is achieved by a method according to claim 1.

According to the present invention, it is advantageously possible to provide a solution for an FMC access to a mobile core network, also for fixed line users (or subscribers) of the telecommunications network, in such a manner that a location information of the fixed line user is able to be effectively used by the mobile core network in a native manner. In fixed line networks, typically a large number of users need to be supported (e.g. in the order of magnitude of 50 million access lines in one network), each fixed-line user typically using an identifier such as a line identifier information which might be specific for that user but which at least carries (or represents) a location information related to the user, either generally or at least related to the user at the considered point in time of the user accessing the network using a specific fixed access line.

In conventionally used telecommunications networks realizing scenarios such that a mobile core network controls the usage of fixed access lines, such as DSL lines or optical fiber lines, in a way that user authentication, session management and the user data transfer is done by the mobile core network, typically a so-called FMC access gateway function (AGF) is used for protocol encapsulation/decapsulation and adaptions between the fixed line access domain and the mobile core network. However, typically no location related information is either transmitted from the fixed access domain to the mobile core network or in any case used by the mobile core network.

In case that the residential gateway is connected to the broadband access network in a mobile-enabled manner (e.g. 5G-enabled manner, i.e. the broadband network is able or configured to provide 5G network access at the location of the residential gateway), the mobile core network (especially 5G core (network)) is able to deliver mobility service but also acting as the backbone infrastructure for services typically delivered via a wireline network. The FMC access gateway function provides for control plane (CP) and user plane (UP) separation, and differs from a classical BNG (broadband network gateway) in that the signaling towards the core network for AAA (Authentication Authorization Accounting) are those defined within specifications of the mobile core network, especially the 5G core network.

According to the present invention, a method is described by means of which a location information of the fixed line user or of the used fixed line is able to be effectively used by the mobile core network in a native manner. This enables the use of any kind of location based service, e.g. an emergency call functionality based on the location of the actually used fixed access line (and/or based on the used FMC access gateway function node or instance) used by the user of the telecommunications network. According to the present invention, a mapping procedure and algorithm is defined between an identifier information of the used fixed line (especially the so-called line ID) which identifies the access port on the access node of a given access line, (and/or the used FMC access gateway function node or instance) on the one hand, and a tracking area code (TAC) and/or the gNB ID and the cell ID which are used within the mobile core network, on the other hand.

According to the present invention, the broadband access network of a telecommunications network is used with a mobile core network for providing fixed mobile convergence, FMC, and/or fixed mobile interworking, FMI, access and functionality to a plurality of residential gateways that are connected to the telecommunications network (via its fixe access lines). The broadband access network especially comprises a central office point of delivery, and the residential gateways are connected to the broadband access network via a plurality of line termination nodes in the sense of a specific residential gateway (of the plurality of residential gateways) is connected or connectable - directly or indirectly - to a specific line termination node of the plurality of line termination nodes, via a specific access node port of the specific line termination node. In this situation, the specific residential gateway (which is also called or which also provides the functionalities of a customer premises equipment or of a home gateway) uses a fixed network identifier information being specific for or indicating the specific access node port used of the specific line termination node. Furthermore, a specific FMC access gateway function node or instance (typically of the central office point of delivery that is used, or to which the residential gateway is connected to) handles the residential gateway's traffic. According to the present invention, it is proposed that (in a first step) a specific (or predefined) mobile network identifier information is mapped or assigned to or derived from the specific fixed network identifier information (i.e. defining the line ID used and/or the specific FMC access gateway function node or instance), and (in a second step), the specific mobile network identifier information is used between the FMC access gateway function node or instance and the mobile core network of or connected to the telecommunications network with respect to the specific access node port of the specific line termination node.

The telecommunications network according to the present invention might primarily be a fixed-line telecommunications network or a mobile communication network but preferably is a telecommunications network having both aspects (or parts) of a fixed-line telecommunications network (or being a fixed-line telecommunications network in such parts) and aspects (or parts) of a mobile communication network (or being a mobile communication network in such parts) - fixed-mobile-convergence networks.

According to the present invention, it is advantageously possible and preferred according to the present invention that the specific fixed network identifier information carries a location-related information, especially with respect to
-- the specific access node port of the specific line termination node used, or
-- the specific access node port of the specific line termination node used, and the respective central office point of delivery (especially the specific access node port of the specific line termination node used, and the respective FMC access gateway function of the respective central office point of delivery),
such that the mobile network identifier information likewise carries the location-related information, wherein especially the location-related information is used for a location based service, especially an emergency service, with respect to the specific residential gateway.

Thereby, it is advantageously possible to easily and effectively implement the inventive method.

Furthermore, it is advantageously possible and preferred according to the present invention that the specific mobile network identifier information is used between the FMC access gateway function node or instance and an access and mobility management function of the mobile core network, thereby especially realizing an N2 interface or reference point between the FMC access gateway function node or instance and an access and mobility management function. Especially, the specific mobile network identifier information is used in the direction from the FMC access gateway function node or instance to the access and mobility management function of the mobile core network, and in the direction from the access and mobility management function of the mobile core network to the FMC access gateway function node or instance.

Thereby, it is advantageously possible to easily and effectively realize the inventive method for operating the broadband access network of the telecommunications network for providing fixed mobile convergence.

According to a further embodiment of the present invention, the specific fixed network identifier information comprises or corresponds to a line identifier information, line ID, related to or assigned to
-- the specific access node port of the specific line termination node used, or
-- the specific access node port of the specific line termination node used, and the respective central office point of delivery (especially the specific access node port of the specific line termination node used, and the respective FMC access gateway function of the respective central office point of delivery).

Thereby, it is advantageously possible to easily and effectively implement the inventive method.

According to the present invention, the mobile network identifier information comprises or corresponds to:
-- the tracking area code, TAC, especially according to the 5G standard, and/or
-- the new radio cell identity, NCI, especially according to the 5G standard,
wherein the mobile network identifier information especially comprises an information, especially one bit, indicating an FMC situation, especially indicating that the mobile network identifier information is related to a fixed network identifier information rather than to a mobile network identifier information.

Thereby, it is advantageously possible according to the present invention that the natively used pieces of mobile network identifier information are able to be used to carry meaningful information with regard to the FMC situation of residential gateways, especially comprising a location information.

According to a further embodiment of the present invention, the specific fixed network identifier information and/or an identifier information relating to the used FMC access gateway function node or instance and/or an identifier information relating to the used FMC access gateway function node or instance is mapped to:
-- the cell identity, especially the cell identity according to the 5G standard, of the mobile network identifier information,
   wherein especially an information indicating the respective central office point of delivery used is mapped to a gNB identifier information, wherein especially one bit of the gNB identifier information indicates an FMC situation, the one bit especially corresponding to the most significant bit of the gNB identifier information, and/or
-- the new radio cell identity of the mobile network identifier information, especially to all bits but one of the new radio cell identity, wherein the one bit indicates an FMC situation, the one bit especially corresponding to the most significant bit of the new radio cell identity, and/or
-- the new radio cell identity of the mobile network identifier information, especially to all bits of the new radio cell identity, wherein especially an information indicating the respective central office point of delivery used is mapped to the tracking area code,
wherein especially one bit of the tracking area code indicates an FMC situation, the one bit especially corresponding to the most significant bit of the tracking area code.

Thereby, it is advantageously possible to easily and effectively implement the inventive method according to different implementation scenarios.

According to a further embodiment of the present invention, at least one bit of the tracking area code is used to indicate a sector coding information.

It is thereby advantageously possible to provide (from the fixed-line part of the telecommunications network to the mobile part of the telecommunications network) or to transmit an additional piece of information, especially likewise a location-related piece of information, or an organizational piece of information.

According to a further embodiment of the present invention, the central office point of delivery and/or the broadband access network comprises or is assigned to a 5G core network.

Furthermore, the present invention relates to a telecommunications network according to claim 10.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically illustrates a part of a broadband access network of an inventive telecommunications network with an FMC access gateway function node or instance, wherein the telecommunications network comprises or is associated or assigned to a mobile core network, especially a 5G core network.
Figures 3 and 4 schematically illustrate examples of mobile network identifier information.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

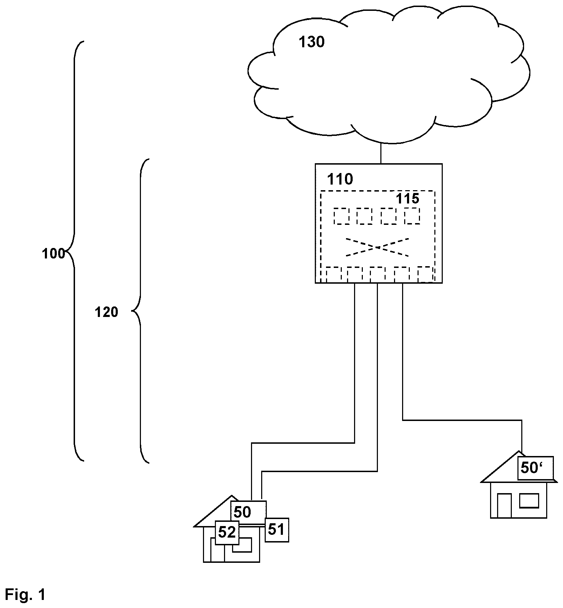

In Figure 1, a telecommunications network 100 according to the present invention is schematically shown, having a fixed line (broadband) access network 120, and a core network 130, the core network especially comprising or being associated or assigned to a mobile core network, especially a 5G core network (not specifically shown in Figure 1). A mobile (or cellular) access network might be present as well, as part of the telecommunications network 100, but is not specifically illustrated in Figure 1. User equipments or client devices 51, 52 are connected to the telecommunications network 100 by means of the fixed line (broadband) access network 120. The telecommunications network 100 comprises, especially as part of the broadband access network 120, at least one logical or physical central office point of delivery 110 that is preferably realized within a data center and that is especially handling different access requirements, especially different access possibilities, of the client devices 51, 52 to network functionalities provided by the telecommunications network 100 or via the telecommunications network 100. The client devices 51, 52 are typically connected to the logical or physical central office point of delivery 110 by means of a residential gateway 50, 50' (also called customer premises equipment 50, 50') or by means of a residential gateway functionality or customer premises equipment functionality that might be built in (or realized within) the client devices 51, 52. Typically, a plurality of residential gateways 50, 50' are connected to the broadband access network 120, only two of which are represented in Figure 1. Preferably but not necessarily, the central office point of delivery 110 comprises a switching fabric 115 comprising a plurality of spine network nodes and typically also a plurality of leaf network nodes which are not explicitly represented in Figure 1.

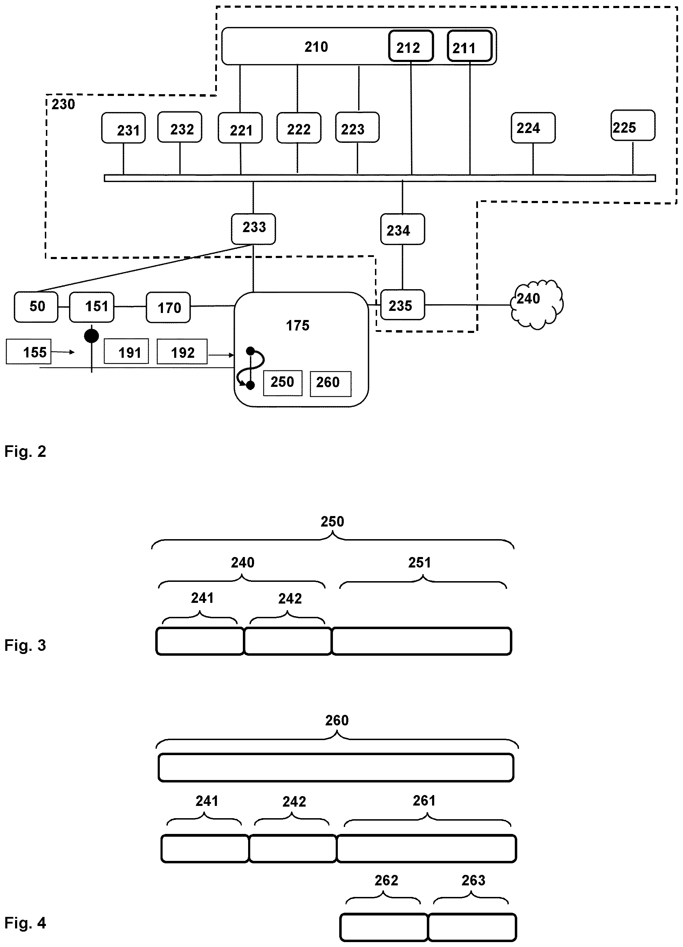

Figure 2 schematically illustrates a part of the broadband access network 120 of the inventive telecommunications network 100 with an FMC access gateway function node or instance 175, wherein the telecommunications network 100 comprises or is associated or assigned to the mobile core network 230, especially a 5G core network.

The central office point of delivery 110, as part of the broadband access network 120 of the telecommunications network 100, typically comprises - besides a controller node and at least one repository node (not specifically shown in Figure 2) - a plurality of line termination nodes, only one of which is schematically shown by means of reference sign 151 in Figure 2. Typically, each of the line termination nodes has one or a plurality of access node ports (not specifically illustrated in Figure 2). In the example represented in Figure 2, the broadband access network 120 comprises only the line termination node 151 to which the residential gateway 50 is - directly or indirectly - connected. The line termination nodes typically present as part of a central office point of delivery 110 might especially be provided to support different access technologies to the residential gateways 50, 50' (or home gateway or customer premises equipment). The client device 51 (not shown in Figure 2) is connected to the telecommunications network 100 (i.e. to the (also called specific) line termination node 151) via the residential gateway 50 (and, perhaps additionally but not shown in Figure 2, a network termination node). The functionality of the residential gateway 50 and the functionality of such a network termination node might be integrated in one device or "box". Even the functionality of the client device 51, the functionality of the residential gateway 50 and the functionality of the network termination node might be integrated in one device or "box". In Figure 2, only one residential gateway device 50 (i.e. a specific residential gateway) is shown. However, a plurality of different residential gateways 50, 50' (and corresponding client devices) might be connected to corresponding network termination nodes (not represented in Figure 2).

In the context of the present invention, in order to separate the "specific" or considered entities from the other entities of the same kind within the broadband access network 120, the line termination node 151 is also called the specific line termination node 151, the network termination node connected to the line termination node 151 is also called the specific network termination node, and the residential gateway 50 connected to the specific network termination node is also called the specific residential gateway.

In case of such line termination nodes having a plurality of access node ports, also a plurality of network termination nodes and/or a plurality of residential gateways 50, 50' are able to be connected to one line termination node 151 and/or (in case that a network termination node has a plurality of ports) also a plurality of residential gateways are able to be connected to one network termination node. Additionally, the broadband access network 120 and/or the central office point of delivery 110 comprises - according to the exemplarily embodiment shown in Figure 2 - a broadband network gateway 170 between the line termination node 151 and the FMC access gateway function node or instance 175.

The central office point of delivery 110 and/or the broadband access network 120 may comprise - besides the line termination nodes - a plurality of service edge nodes, a controller node, and at least one repository node (not specifically shown in Figure 2).

Figure 2 furthermore shows a mobile core network 230 (or mobile core bundle, especially comprising a network repository function 231, a network data analytics function 232, an access and mobility management function 233, a session management function 234, and a user plane function 235, connected to a data network 240 (or a plurality of data networks). Furthermore, the telecommunications network 100 (and/or the mobile core network 230) especially comprises a network data layer 210, comprising a unified data repository 211 and an unstructured data storage function 212. Furthermore, the telecommunications network 100 (and/or the mobile core network 230) especially comprises a policy and charging function 221, a unified data management 222, an authentication server function 223, a charging function 224, and an online charging system 225.

According to the present invention, a method for operating a broadband access network 120 of a telecommunications network 100 for providing fixed mobile convergence, FMC, and/or fixed mobile interworking, FMI, access and functionality to a plurality of residential gateways 50, 50' connected to the telecommunications network 100 is provided. The telecommunications network 100 comprises or is connected (or assigned) to a mobile core network 230, and the broadband access network 120 especially comprises a central office point of delivery 110, the residential gateways 50, 50' being connected to the broadband access network 120 via a plurality of line termination nodes. A specific residential gateway 50 of the plurality of residential gateways 50, 50' is connectable - directly or indirectly - to a specific line termination node 151 of the plurality of line termination nodes, using a specific access node port of the specific line termination node 151 and using a fixed network identifier information being specific for or indicating the specific access node port used of the specific line termination node 151. The broadband access network 120 comprises an FMC access gateway function node or instance 175, especially a 5G access gateway function node or instance, and the inventive method comprises the steps of:
-- a specific mobile network identifier information 250, 260 being mapped or assigned to or derived from the specific fixed network identifier information 191, 192, and
-- the specific mobile network identifier information 250, 260 being used between the FMC access gateway function node or instance 175 and the mobile core network 230 of or connected to the telecommunications network 100 with respect to the specific access node port of the specific line termination node 151.

Typically, in fixed line networks the location information of a given user (e.g. the residential gateway 50) is associated with the so-called Line-ID (Identifier) of the access port (i.e. the specific access node port) on the access node (i.e. the specific line termination node 151) where the access line of this respective user or residential gateway 50 is terminated. In a 5G core network an identifier as (or corresponding to) the Line-ID does not exist. Location information of a user is associated with parameters such as TAC (Tracking Area Code) and cell-ID where a TAC identifies a list of cell-IDs which belong to a certain geographical area. These parameters can be requested by the access and mobility management function 233 of the 5G Core (i.e. the mobile core network 230) from the eNodeB (in case of a standard mobile user equipment connected to the mobile core network 230) or from the FMC access gateway function node or instance 175 (in case of the residential gateway 50), typically using a location reporting service standardized by or as part of 3GPP. Hence, the location information is not transmitted (by the fixed access network side (or the respective network components such as the specific line termination node 151 and/or the broadband network gateway 170)) towards the mobile core network 230 (such as a 5G core system) such that the fixed network identifier information, and especially the location information, might be natively derived.

Figures 3 and 4 schematically illustrate examples of mobile network identifier information 250, 260, i.e. pieces of identifier information used within the mobile core network 230 for the case of the mobile core network being a 5G core system. Figure 3 schematically shows the tracking area identity 250 (TAI), being composed of the PLMN identity 240, and the tracking area code 251 (TAC) (of typically 24 bits). The PLMN identity (or PLMN ID) 240 typically comprises the mobile country code 241 (MCC) (of typically 12 bits) and the mobile network code 242 (MNC) (of typically 8 to 12 bits). Figure 4 schematically shows the new radio cell global identity 260 (NCGI), being composed of the PLMN identity 240, and the new radio cell identity 261 (NCI) (of typically 36 bits). Again, the PLMN identity 240 typically comprises the mobile country code 241 (MCC) and the mobile network code 242 (MNC). The new radio cell identity 261 is typically composed of the next generation Node B identity 262 (gNB ID) (of typically 22 to 32 bits) and the cell identity 263 (CI) (of typically 4 to 14 bits).

It is especially preferred according to the present invention, that the specific fixed network identifier information 191, 192 carries a location-related information such that the mobile network identifier information 250, 260 (by virtue of the mobile network identifier information 250, 260 being mapped or assigned to or derived (at least in part) from the specific fixed network identifier information 191, 192) likewise carries the location-related information. Hence, it is advantageously and preferably possible according to the present invention that the location-related information is able to be used (by the mobile core network 230) for a location based service, especially an emergency service, with respect to the specific residential gateway 50. This location-related information especially stems from the specific access node port of the specific line termination node 151 used. It is also possible and preferred according to the present invention that the location-related information not only comprises the specific access node port of the specific line termination node 151 used but additionally also indicates the respective central office point of delivery 110 used. Hence, in this latter case, from the specific fixed network identifier information 191, 192, not only the specific line termination node 151 used is derivable but additionally also the respective central office point of delivery 110 used. Preferably, the specific fixed network identifier information 191, 192 comprises or corresponds to a line identifier information, line ID that is likewise especially related to or assigned to the specific access node port of the specific line termination node 151 used. It is also possible and preferred according to the present invention that the line identifier information, line ID, not only comprises (or is related to) the specific access node port of the specific line termination node 151 used but additionally also indicates the respective central office point of delivery 110 used. The specific fixed network identifier information 191, 192 especially comprises or is composed of: the PLMN ID 191 (as part of the fixed network identifier information), and the line identifier information, line ID 192.

It is furthermore preferred according to the present invention that the specific line termination node 151 is connected (possibly via a broadband network gateway 170) to the FMC access gateway function node or instance 275 as if it would be connected to a purely fixed-line telecommunications network. It is especially the FMC access gateway function node or instance 275 that translates the specific fixed network identifier information 191, 192 towards the specific mobile network identifier information 250, 260 for communication purposes towards the mobile core network 230, especially towards the access and mobility management function 233 of the mobile core network 230. Typically, between the FMC access gateway function node or instance 175 and the access and mobility management function 233 of the mobile core network 230, an N2 interface or reference point is realized. Furthermore typically, between the FMC access gateway function node or instance 175 and the user plane function 235 of the mobile core network 230, an N3 interface or reference point is realized. Furthermore typically, between the residential gateway 50 and the access and mobility management function 233 of the mobile core network 230, an N1 interface or reference point is realized. Likewise, it is especially the FMC access gateway function node or instance 275 that translates the specific mobile network identifier information 250, 260 towards the specific fixed network identifier information 191, 192 for communication purposes (of the mobile core network 230, especially the user plane function 235 of the mobile core network 230) towards the fixed network side, especially the specific line termination node 151 (possibly via the broadband network gateway 170), hence towards the residential gateway 50.

The mobile network identifier information 250, 260 comprises or corresponds to the tracking area code, TAC, especially according to the 5G standard, and/or to the new radio cell identity, NCI, especially according to the 5G standard. Hence, the mobile core network 230 and its components receive identifier information related to the residential gateway 50 according to the same format as if the residential gateway 50 were a device (such as a mobile phone or a user equipment) natively connected to the mobile core network 230. According to the present invention, it is preferred that the mobile network identifier information 250, 260 comprises an information (or a specific indication) regarding the FMC case or situation of the residential gateway 50. This is especially realized by means of the mobile network identifier information 250, 260 comprising one bit indicating the FMC situation (i.e. indicating that the mobile network identifier information 250, 260 is related to a fixed network identifier information rather than to a mobile network identifier information).

According to the present invention, several possibilities are proposed to map the specific fixed network identifier information 191, 192 and/or an identifier information relating to the used FMC access gateway function node or instance 175 to the mobile network identifier information 250, 260:
According to a first embodiment or variant according to the present invention, the specific fixed network identifier information 191, 192 and/or the identifier information relating to the used FMC access gateway function node or instance 175 is mapped to the cell identity 263, especially the cell identity according to the 5G standard, of the mobile network identifier information 250, 260. Typically, the cell identity 263 comprises, at maximum, 14 bits, thus it is able to refer to 16384 different line IDs or line ID identifiers. Especially, a part of the gNB identifier information 262 (especially the most significant bit but alternatively also the least significant bit or a bit position in between) is used to indicate the FMC situation (i.e. the use of a 5G residential gateway), and an information indicating the respective central office point of delivery 110 used (and/or the used FMC access gateway function node or instance 175) is mapped to the gNB identifier information 262.
According to a second alternative embodiment or variant according to the present invention, the specific fixed network identifier information 191, 192 and/or the identifier information relating to the used FMC access gateway function node or instance 175 is mapped to the new radio cell identity 261, especially according to the 5G standard, of the mobile network identifier information 250, 260 (i.e. comprising both the gNB identifier information 262 and the cell identity 263). Typically, the new radio cell identity 261 comprises 36 bits, wherein especially all of these bits but one are used to refer to different line IDs or to different pieces of line ID identifier information; the one bit indicating an FMC situation, preferably corresponding to either the most significant bit of the new radio cell identity 261, or to the least significant bit of the new radio cell identity 261, or to a bit in between.
According to a third alternative embodiment or variant according to the present invention, the specific fixed network identifier information 191, 192 and/or the identifier information relating to the used FMC access gateway function node or instance 175 is likewise mapped to the new radio cell identity 261, especially according to the 5G standard, of the mobile network identifier information 250, 260 (i.e. comprising both the gNB identifier information 262 and the cell identity 263). Typically, the new radio cell identity 261 comprises 36 bits, wherein, according to the third alternative embodiment or variant of the present invention, all of these bits are used to refer to different line IDs or to different pieces of line ID identifier information; in this case, the bit (or indicator) to indicate an FMC situation is typically part of the tracking area code 251: Especially one bit of the tracking area code 251 indicates an FMC situation (the one bit especially corresponding to the most significant bit of the tracking area code 251, or to the least significant bit of the tracking area code 251, or to a bit in between) and an information indicating the respective central office point of delivery 110 used (and/or the identifier information relating to the used FMC access gateway function node or instance 175) is likewise mapped to the tracking area code 251.
According to a further alternative embodiment or variant according to the present invention that is able to be cumulatively realized together with all afore mentioned alternative embodiments or variants, at least one bit of the tracking area code 251 is used to indicate a sector coding information, e.g. being related to the used FMC access gateway function node or instance 175.

## Claims

1. Method for operating a broadband access network (120) of a telecommunications network (100) for providing fixed mobile convergence, FMC, and/or fixed mobile interworking, FMI, access and functionality to a plurality of residential gateways (50, 50') connected to the telecommunications network (100), the telecommunications network (100) comprising or being connected to a mobile core network (230), the broadband access network (120) especially comprising a central office point of delivery (110), the residential gateways (50, 50') being connected to the broadband access network (120) via a plurality of line termination nodes (151, 152, 153), wherein a specific residential gateway (50) of the plurality of residential gateways (50, 50') is connectable - directly or indirectly - to a specific line termination node (151) of the plurality of line termination nodes (151, 152, 153), using a specific access node port of the specific line termination node (151) and using a fixed network identifier information (191, 192) being specific for or indicating the specific access node port used of the specific line termination node (151), wherein the broadband access network (120) comprises an FMC access gateway function node or instance (175), especially a 5G access gateway function node or instance, wherein the method comprises the following steps:
-- in a first step, a specific mobile network identifier information (250, 260) is mapped or assigned to or derived from the specific fixed network identifier information (191, 192), wherein the mobile network identifier information (250, 260) comprises or corresponds to a tracking area code, TAC, and/or a new radio cell identity, NCI, and
-- in a second step, subsequent to the first step, the specific mobile network identifier information (250, 260) is used between the FMC access gateway function node or instance (175) and the mobile core network (230) of or connected to the telecommunications network (100) with respect to the specific access node port of the specific line termination node (151)

2. Method according to claim 1, wherein the specific fixed network identifier information (191, 192) carries a location-related information, especially with respect to
-- the specific access node port of the specific line termination node (151) used, or
-- the specific access node port of the specific line termination node (151) used, and the respective central office point of delivery (110),
such that the mobile network identifier information (250, 260) likewise carries the location-related information.

3. Method according to claim 2, wherein the location-related information is used for a location based service, especially an emergency service, with respect to the specific residential gateway (50).

4. Method according to one of the preceding claims, wherein the specific mobile network identifier information (250, 260) is used between the FMC access gateway function node or instance (175) and an access and mobility management function (233) of the mobile core network (230), thereby especially realizing an N2 interface or reference point between the FMC access gateway function node or instance (175) and an access and mobility management function (233).

5. Method according to one of the preceding claims, wherein the specific fixed network identifier information (191, 192) comprises or corresponds to a line identifier information, line ID, related to or assigned to
-- the specific access node port of the specific line termination node (151) used, or
-- the specific access node port of the specific line termination node (151) used, and the respective central office point of delivery (110).

6. Method according to one of the preceding claims, wherein the mobile network identifier information (250, 260) comprises an information, especially one bit, indicating an FMC situation, indicating that the mobile network identifier information (250, 260) is related to a fixed network identifier information rather than to a mobile network identifier information.

7. Method according to one of the preceding claims, wherein the specific fixed network identifier information (191, 192) and/or an identifier information relating to the used FMC access gateway function node or instance (175) is mapped to:
-- the cell identity (263), especially the cell identity according to the 5G standard, of the mobile network identifier information (250, 260),
wherein especially an information indicating the respective central office point of delivery (110) used is mapped to a gNB identifier information (262), wherein especially one bit of the gNB identifier information (262) indicates an FMC situation, the one bit especially corresponding to the most significant bit of the gNB identifier information (262), and/or
-- the new radio cell identity (261) of the mobile network identifier information (250, 260), especially to all bits but one of the new radio cell identity (261), wherein the one bit indicates an FMC situation, the one bit especially corresponding to the most significant bit of the new radio cell identity (261), and/or
-- the new radio cell identity (261) of the mobile network identifier information (250, 260), especially to all bits of the new radio cell identity (261), wherein especially an information indicating the respective central office point of delivery (110) used is mapped to the tracking area code (251), wherein especially one bit of the tracking area code (251) indicates an FMC situation, the one bit especially corresponding to the most significant bit of the tracking area code (251).

8. Method according to one of the preceding claims, wherein at least one bit of the tracking area code (251) is used to indicate a sector coding information.

9. Method according to one of the preceding claims, wherein the central office point of delivery (110) and/or the broadband access network (120) comprises or is assigned to a 5G core network.

10. Telecommunications network (100) for operating a broadband access network (120) of the telecommunications network (100) for providing fixed mobile convergence, FMC, and/or fixed mobile interworking, FMI, access and functionality to a plurality of residential gateways (50, 50') connected to the telecommunications network (100), the telecommunications network (100) comprising or being connected to a mobile core network (230), the broadband access network (120) especially comprising a central office point of delivery (110), the residential gateways (50, 50') being connected to the broadband access network (120) via a plurality of line termination nodes (151, 152, 153), wherein a specific residential gateway (50) of the plurality of residential gateways (50, 50') is connectable - directly or indirectly - to a specific line termination node (151) of the plurality of line termination nodes (151, 152, 153), using a specific access node port of the specific line termination node (151) and using a fixed network identifier information (191, 192) being specific for or indicating the specific access node port used of the specific line termination node (151), wherein the broadband access network (120) comprises an FMC access gateway function node or instance (175), especially a 5G access gateway function node or instance, wherein the telecommunications network (100) is **characterized by** being configured such that:
-- a specific mobile network identifier information (250, 260) is mapped or assigned to or derived from the specific fixed network identifier information (191, 192), wherein the mobile network identifier information (250, 260) comprises or corresponds to a tracking area code, TAC, and/or a new radio cell identity, NCI, and
-- the specific mobile network identifier information (250, 260) is used between the FMC access gateway function node or instance (175) and the mobile core network (230) of or connected to the telecommunications network (100) with respect to the specific access node port of the specific line termination node (151).

## Patentansprüche

1. Verfahren zum Betreiben eines Breitbandzugangsnetzes (120) eines Telekommunikationsnetzes (100) zum Bereitstellen von Fixed Mobile Convergence (FMC)- und/oder Fixed Mobile Interworking (FMI)-Zugang und -Funktionalität für mehrere Residential Gateways (50, 50'), die mit dem Telekommunikationsnetz (100) verbunden sind, wobei das Telekommunikationsnetz (100) ein Mobilfunk-Kernnetz (230) umfasst oder damit verbunden ist, wobei das Breitbandzugangsnetz (120) insbesondere einen Vermittlungsamt-Übergabepunkt (110) umfasst, wobei die Residential Gateways (50, 50') über mehrere Leitungsabschlussknoten (151, 152, 153) mit dem Breitbandzugangsnetz (120) verbunden sind, wobei ein spezifischer Residential Gateway (50) der mehreren Residential Gateways (50, 50') - direkt oder indirekt - mit einem spezifischen Leitungsabschlussknoten (151) der mehreren Leitungsabschlussknoten (151, 152, 153) unter Verwendung eines spezifischen Zugangsknoten-Ports des spezifischen Leitungsabschlussknotens (151) und unter Verwendung einer Festnetz-Kennungsinformation (191, 192), die für den verwendeten spezifischen Zugangsknoten-Port des spezifischen Leitungsabschlussknotens (151) spezifisch ist oder diesen angibt, verbindbar ist, wobei das Breitbandzugangsnetz (120) einen FMC-Zugangs-Gateway-Funktionsknoten oder eine FMC-Zugangs-Gateway-Instanz (175), insbesondere einen 5G-Zugangs-Gateway-Funktionsknoten oder eine 5G-Zugangs-Gateway-Instanz, umfasst, wobei das Verfahren die folgenden Schritte umfasst:
- in einem ersten Schritt wird eine spezifische Mobilfunknetz-Kennungsinformation (250, 260) auf die spezifische Festnetz-Kennungsinformation (191, 192) abgebildet oder dieser zugewiesen oder von dieser abgeleitet, wobei die Mobilfunknetz-Kennungsinformation (250, 260) einen Sendemast-Positionscode (Tracking Area Code, TAC) und/oder eine neue Funkzellenidentität (New Radio Cell Identity, NCI) umfasst oder diesen entspricht, und
- in einem zweiten Schritt, im Anschluss an den ersten Schritt, wird die spezifische Mobilfunknetz-Kennungsinformation (250, 260) zwischen dem FMC-Zugangs-Gateway-Funktionsknoten oder der FMC-Zugangs-Gateway-Instanz (175) und dem Mobilfunk-Kernnetz (230) des Telekommunikationsnetzes (100), das Teil des Telekommunikationsnetzes (100) oder mit diesem verbunden ist, in Bezug auf den spezifischen Zugangsknoten-Port des spezifischen Leitungsabschlussknotens (151) verwendet.

2. Verfahren nach Anspruch 1, wobei die spezifische Festnetz-Kennungsinformation (191, 192) eine standortbezogene Information transportiert, insbesondere in Bezug auf
- den spezifischen Zugangsknoten-Port des verwendeten spezifischen Leitungsabschlussknotens (151) oder
- den spezifischen Zugangsknoten-Port des verwendeten spezifischen Leitungsabschlussknotens (151) und den jeweiligen Vermittlungsamt-Übergabepunkt (110),
dergestalt, dass die Mobilfunknetz-Kennungsinformation (250, 260) ebenfalls die standortbezogene Information transportiert.

3. Verfahren nach Anspruch 2, wobei die standortbezogene Information für einen standortbezogenen Dienst, insbesondere einen Notfalldienst, in Bezug auf den spezifischen Residential Gateway (50) verwendet werden.

4. Verfahren nach einem der vorangehenden Ansprüche, wobei die spezifische Mobilfunknetz-Kennungsinformation (250, 260) zwischen dem FMC-Zugangs-Gateway-Funktionsknoten oder der FMC-Zugangs-Gateway-Instanz (175) und einer Zugangs- und Mobilitätsmanagementfunktion (233) des Mobilfunk-Kernnetzes (230) verwendet wird, wodurch insbesondere eine N2-Schnittstelle oder ein N2-Bezugspunkt zwischen dem FMC-Zugangs-Gateway-Funktionsknoten oder der FMC-Zugangs-Gateway-Instanz (175) und einer Zugangs- und Mobilitätsmanagementfunktion (233) realisiert wird.

5. Verfahren nach einem der vorangehenden Ansprüche, wobei die spezifische Festnetz-Kennungsinformation (191, 192) eine Leitungskennungsinformation (Leitungs-ID) umfasst oder dieser entspricht, die sich auf Folgendes bezieht oder Folgendem zugewiesen ist:
- den spezifischen Zugangsknoten-Port des verwendeten spezifischen Leitungsabschlussknotens (151) oder
- den spezifischen Zugangsknoten-Port des verwendeten spezifischen Leitungsabschlussknotens (151) und den jeweiligen Vermittlungsamt-Übergabepunkt (110.

6. Verfahren nach einem der vorangehenden Ansprüche, wobei die Mobilfunknetz-Kennungsinformation (250, 260) eine Information, insbesondere ein Bit, umfasst, die eine FMC-Situation angibt, was angibt, dass sich die Mobilfunknetz-Kennungsinformation (250, 260) auf eine Festnetz-Kennungsinformation und nicht auf eine Mobilfunknetz-Kennungsinformation bezieht.

7. Verfahren nach einem der vorangehenden Ansprüche, wobei die spezifische Festnetz-Kennungsinformation (191, 192) und/oder eine Kennungsinformation in Bezug auf den verwendeten FMC-Zugangs-Gateway-Funktionsknoten oder die verwendete FMC-Zugangs-Gateway-Instanz (175) abgebildet werden auf:
- die Zellenidentität (263), insbesondere die Zellenidentität gemäß dem 5G-Standard, der Mobilfunknetz-Kennungsinformation (250, 260),
wobei insbesondere eine Information, die den jeweiligen verwendeten Vermittlungsamt-Übergabepunkt (110) angibt, auf eine gNB-Kennungsinformation (262) abgebildet wird, wobei insbesondere ein Bit der gNB-Kennungsinformation (262) eine FMC-Situation angibt, wobei das eine Bit insbesondere dem höchstwertigen Bit der gNB-Kennungsinformation (262) entspricht, und/oder
- die neue Funkzellenidentität (261) der Mobilfunknetz-Kennungsinformation (250, 260), insbesondere auf alle Bits außer einem der neuen Funkzellenidentität (261), wobei das eine Bit eine FMC-Situation angibt, wobei das eine Bit insbesondere dem höchstwertigen Bit der neuen Funkzellenidentität (261) entspricht, und/oder
- die neue Funkzellenidentität (261) der Mobilfunknetz-Kennungsinformation (250, 260), insbesondere auf alle Bits der neuen Funkzellenidentität (261), wobei insbesondere eine Information, die den jeweiligen genutzten Vermittlungsamt-Übergabepunkt (110) angibt, auf den Sendemast-Positionscode (251) abgebildet wird, wobei insbesondere ein Bit des Sendemast-Positionscodes (251) eine FMC-Situation angibt, wobei das eine Bit insbesondere dem höchstwertigen Bit des Sendemast-Positionscodes (251) entspricht.

8. Verfahren nach einem der vorangehenden Ansprüche, wobei mindestens ein Bit des Sendemast-Positionscodes (251) zum Angeben einer Sektorcodierungsinformation verwendet wird.

9. Verfahren nach einem der vorangehenden Ansprüche, wobei der Vermittlungsamt-Übergabepunkt (110) und/oder das Breitbandzugangsnetz (120) ein 5G-Kernnetz umfassen oder einem 5G-Kernnetz zugewiesen sind.

10. Telekommunikationsnetz (100) zum Betreiben eines Breitbandzugangsnetzes (120) des Telekommunikationsnetzes (100) zum Bereitstellen von Fixed Mobile Convergence (FMC)- und/oder Fixed Mobile Interworking (FMI)-Zugang und -Funktionalität für mehrere Residential Gateways (50, 50'), die mit dem Telekommunikationsnetz (100) verbunden sind, wobei das Telekommunikationsnetz (100) ein Mobilfunk-Kernnetz (230) umfasst oder damit verbunden ist, wobei das Breitbandzugangsnetz (120) insbesondere einen Vermittlungsamt-Übergabepunkt (110) umfasst, wobei die Residential Gateways (50, 50') über mehrere Leitungsabschlussknoten (151, 152, 153) mit dem Breitbandzugangsnetz (120) verbunden sind, wobei ein spezifischer Residential Gateway (50) der mehreren Residential Gateways (50, 50') - direkt oder indirekt - mit einem spezifischen Leitungsabschlussknoten (151) der mehreren Leitungsabschlussknoten (151, 152, 153) unter Verwendung eines spezifischen Zugangsknoten-Ports des spezifischen Leitungsabschlussknotens (151) und unter Verwendung einer Festnetz-Kennungsinformation (191, 192), die für den verwendeten spezifischen Zugangsknoten-Port des spezifischen Leitungsabschlussknotens (151) spezifisch ist oder diesen angibt, verbindbar ist, wobei das Breitbandzugangsnetz (120) einen FMC-Zugangs-Gateway-Funktionsknoten oder eine FMC-Zugangs-Gateway-Instanz (175), insbesondere einen 5G-Zugangs-Gateway-Funktionsknoten oder eine 5G-Zugangs-Gateway-Instanz, umfasst, wobei das Telekommunikationsnetz (100) **dadurch gekennzeichnet ist, dass** es so eingerichtet ist, dass:
- eine spezifische Mobilfunknetz-Kennungsinformation (250, 260) auf die spezifische Festnetz-Kennungsinformation (191, 192) abgebildet oder dieser zugewiesen oder von dieser abgeleitet wird, wobei die Mobilfunknetz-Kennungsinformation (250, 260) einen Sendemast-Positionscode (Tracking Area Code, TAC) und/oder eine neue Funkzellenidentität (New Radio Cell Identity, NCI) umfasst oder diesen entspricht, und
- die spezifische Mobilfunknetz-Kennungsinformation (250, 260) zwischen dem FMC-Zugangs-Gateway-Funktionsknoten oder der FMC-Zugangs-Gateway-Instanz (175) und dem Mobilfunk-Kernnetz (230) des Telekommunikationsnetzes (100), das Teil des Telekommunikationsnetzes (100) oder mit diesem verbunden ist, in Bezug auf den spezifischen Zugangsknoten-Port des spezifischen Leitungsabschlussknotens (151) verwendet wird.

## Revendications

1. Procédé d'exploitation d'un réseau d'accès à large bande (120) d'un réseau de télécommunications (100) pour fournir une convergence fixe-mobile (Fixed Mobile Convergence, FMC) et/ou un accès et une fonctionnalité d'interfonctionnement fixe-mobile (Fixed Mobile Interworking, FMI) à une pluralité de passerelles résidentielles (50, 50') connectées au réseau de télécommunications (100), le réseau de télécommunications (100) comprenant ou étant connecté à un réseau central mobile (230), le réseau d'accès à large bande (120) comprenant notamment un point de distribution de central téléphonique (110), les passerelles résidentielles (50, 50') étant connectées au réseau d'accès à large bande (120) par l'intermédiaire d'une pluralité de nœuds de terminaison de ligne (151, 152, 153), dans lequel une passerelle résidentielle spécifique (50) parmi la pluralité de passerelles résidentielles (50, 50') peut être connectée - directement ou indirectement - à un nœud de terminaison de ligne spécifique (151) de la pluralité de nœuds de terminaison de ligne (151, 152, 153), à l'aide d'un port de nœud d'accès spécifique du nœud de terminaison de ligne spécifique (151) et à l'aide d'informations d'identificateur de réseau fixe (191, 192) spécifiques à ou indiquant le port de nœud d'accès spécifique utilisé du nœud de terminaison de ligne spécifique (151), dans lequel le réseau d'accès à large bande (120) comprend un nœud ou une instance de fonction de passerelle d'accès FMC (175), notamment un nœud ou une instance de fonction de passerelle d'accès 5G, le procédé comprenant les étapes suivantes :
- dans une première étape, des informations d'identificateur de réseau mobile spécifiques (250, 260) sont mappées à ou affectées à ou dérivées d'informations d'identificateur de réseau fixe spécifiques (191, 192), dans lequel les informations d'identificateur de réseau mobile (250, 260) comprennent ou correspondent à un indicatif régional de suivi (Tracking Area Code, TAC) et/ou à une identité de cellule nouvelle radio (New Radio Cell Identity, NCI) et
- dans une seconde étape, subséquente à la première étape, les informations d'identificateur de réseau mobile spécifiques (250, 260) sont utilisées entre le nœud ou l'instance de fonction de passerelle d'accès FMC (175) et le réseau central mobile (230) du ou connecté au réseau de télécommunications (100) par rapport au port de nœud d'accès spécifique du nœud de terminaison de ligne spécifique (151).

2. Procédé selon la revendication 1, dans lequel les informations d'identificateur de réseau fixe spécifiques (191, 192) transportent des informations liées à la localisation, notamment en ce qui concerne
- le port de nœud d'accès spécifique du nœud de terminaison de ligne spécifique (151) utilisé, ou
- le port de nœud d'accès spécifique du nœud de terminaison de ligne spécifique (151) utilisé, et le point de distribution de central téléphonique respectif (110),
de sorte que les informations d'identificateur de réseau mobile (250, 260) transportent également les informations liées à la localisation.

3. Procédé selon la revendication 2, dans lequel les informations liées à la localisation sont utilisées pour un service basé sur la localisation, notamment un service d'urgence, par rapport à la passerelle résidentielle spécifique (50).

4. Procédé selon l'une des revendications précédentes, dans lequel les informations d'identificateur de réseau mobile spécifiques (250, 260) sont utilisées entre le nœud ou l'instance de fonction de passerelle d'accès FMC (175) et une fonction de gestion d'accès et de mobilité (233) du réseau central mobile (230), réalisant ainsi notamment une interface N2 ou un point de référence entre le nœud ou l'instance de fonction de passerelle d'accès FMC (175) et une fonction de gestion d'accès et de mobilité (233).

5. Procédé selon l'une des revendications précédentes, dans lequel les informations d'identificateur de réseau fixe spécifiques (191, 192) comprennent ou correspondent à des informations d'identificateur de ligne, ID de ligne, liées à ou affectées à
- le port de nœud d'accès spécifique du nœud de terminaison de ligne spécifique (151) utilisé, ou
- le port de nœud d'accès spécifique du nœud de terminaison de ligne spécifique (151) utilisé, et le point de distribution de central téléphonique respectif (110).

6. Procédé selon l'une des revendications précédentes, dans lequel les informations d'identificateur de réseau mobile (250, 260) comprennent des informations, notamment un bit, indiquant une situation FMC, indiquant que les informations d'identificateur de réseau mobile (250, 260) sont liées à des informations d'identificateur de réseau fixe plutôt qu'à des informations d'identification de réseau mobile.

7. Procédé selon l'une des revendications précédentes, dans lequel les informations d'identificateur de réseau fixe spécifiques (191, 192) et/ou des informations d'identificateur relatives au nœud ou à l'instance de fonction de passerelle d'accès FMC (175) utilisé(e) sont mappées à :
- l'identité de cellule (263), notamment l'identité de cellule selon la norme 5G, des informations d'identificateur de réseau mobile (250, 260),
dans lequel notamment, des informations indiquant le point de distribution de central téléphonique respectif (110) utilisé sont mappées à des informations d'identificateur de gNB (262), dans lequel notamment un bit des informations d'identificateur de gNB (262) indique une situation FMC, ledit bit correspondant notamment au bit de poids fort des informations d'identificateur de gNB (262), et/ou
- l'identité de cellule nouvelle radio (261) des informations d'identificateur de réseau mobile (250, 260), notamment pour tous les bits sauf un de l'identité de cellule nouvelle radio (261), dans lequel le bit indique une situation FMC, ledit bit correspondant notamment au bit de poids fort de l'identité de cellule nouvelle radio (261), et/ou
- l'identité de cellule nouvelle radio (261) des informations d'identificateur de réseau mobile (250, 260), notamment pour tous les bits de l'identité de cellule nouvelle radio (261), dans lequel notamment des informations indiquant le point de distribution de central téléphonique respectif (110) utilisé sont mappées à l'indicatif de zone de suivi (251), dans lequel notamment un bit de l'indicatif de zone de suivi (251) indique une situation FMC, ledit bit correspondant notamment au bit de poids fort de l'indicatif de zone de suivi (251).

8. Procédé selon l'une des revendications précédentes, dans lequel au moins un bit de l'indicatif de zone de suivi (251) est utilisé pour indiquer des informations de codage de secteur.

9. Procédé selon l'une des revendications précédentes, dans lequel le point de distribution de central téléphonique (110) et/ou le réseau d'accès à large bande (120) comprennent ou sont affectés à un réseau central 5G.

10. Réseau de télécommunications (100) pour exploiter un réseau d'accès à large bande (120) du réseau de télécommunications (100) pour fournir une convergence fixe-mobile (Fixed Mobile Convergence, FMC) et/ou un accès et une fonctionnalité d'interfonctionnement fixe-mobile (Fixed Mobile Interworking, FMI) à une pluralité de passerelles résidentielles (50, 50') connectées au réseau de télécommunications (100), le réseau de télécommunications (100) comprenant ou étant connecté à un réseau central mobile (230), le réseau d'accès à large bande (120) comprenant notamment un point de distribution de central téléphonique (110), les passerelles résidentielles (50, 50') étant connectées au réseau d'accès à large bande (120) par l'intermédiaire d'une pluralité de nœuds de terminaison de ligne (151, 152, 153), dans lequel une passerelle résidentielle spécifique (50) parmi la pluralité de passerelles résidentielles (50, 50') peut être connectée - directement ou indirectement - à un nœud de terminaison de ligne spécifique (151) de la pluralité de nœuds de terminaison de ligne (151, 152, 153), à l'aide d'un port de nœud d'accès spécifique du nœud de terminaison de ligne spécifique (151) et à l'aide d'informations d'identificateur de réseau fixe (191, 192) spécifiques à ou indiquant le port de nœud d'accès spécifique utilisé du nœud de terminaison de ligne spécifique (151), dans lequel le réseau d'accès à large bande (120) comprend un nœud ou une instance de fonction de passerelle d'accès FMC (175), notamment un nœud ou une instance de fonction de passerelle d'accès 5G, dans lequel le réseau de télécommunications (100) est **caractérisé en ce qu'**il est configuré de telle sorte que :
- des informations d'identificateur de réseau mobile spécifiques (250, 260) sont mappées à ou affectées à ou dérivées d'informations d'identificateur de réseau fixe spécifiques (191, 192), dans lequel les informations d'identificateur de réseau mobile (250, 260) comprennent ou correspondent à un indicatif régional de suivi (Tracking Area Code, TAC) et/ou à une identité de cellule nouvelle radio (New Radio Cell Identity, NCI) et
- les informations d'identificateur de réseau mobile spécifiques (250, 260) sont utilisées entre le nœud ou l'instance de fonction de passerelle d'accès FMC (175) et le réseau central mobile (230) du ou connecté au réseau de télécommunications (100) par rapport au port de nœud d'accès spécifique du nœud de terminaison de ligne spécifique (151).
